(19)

Europäisches Patentamt

European Patent Office

Office européen des brevets

(11) **EP 3 929 156 A1**

(12) **EUROPEAN PATENT APPLICATION**

(43) Date of publication:
**29.12.2021 Bulletin 2021/52**

(51) Int Cl.:
*C01G 23/04* (2006.01)  *H01M 4/48* (2010.01)

(21) Application number: **20382542.7**

(22) Date of filing: **22.06.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Fundación Imdea Materiales
28906 Getafe (Madrid) (ES)**

(72) Inventors:
- ETACHERI, Vinodkumar
  E-28901 Getafe, Madrid (ES)
- VINCENT, Mewin
  E-28901 Getafe, Madrid (ES)
- SAI AVVARU, Venkata
  E-28901 Getafe, Madrid (ES)

(74) Representative: **ABG Intellectual Property Law, S.L.
Avenida de Burgos, 16D
Edificio Euromor
28036 Madrid (ES)**

(54) **ELECTRODE COMPRISING OXYGEN-DEFICIENT RUTILE TIO2 NANOWIRES AND USES THEREOF**

(57) The invention relates to the field of ultrafast charging ion-batteries. In the present invention, an electrode is provided comprising oxygen-deficient rutile $TiO_2$ nanowires, wherein the nanowires are characterized by:
- a width comprised between 3 and 10 nm;
- a length comprised between 50 and 500 nm; and
- a high-resolution O Is XPS signal of $TiO_2$ nanowires between 530.5 and 535.0 eV.

The invention further contemplates the method for their preparation and a battery comprising said nanowires, and uses thereof.

EP 3 929 156 A1

## Description

FIELD OF THE INVENTION

This invention relates to the field of ultrafast charging batteries. In the present invention, one electrode comprises oxygen-deficient rutile $TiO_2$ nanowires.

BACKGROUND

Rechargeable batteries are one of the most prominent energy storage devices for portable electronics, medical applications, electric vehicles and power grids. Secondary lithium-ion batteries attracted tremendous interest due to their high energy density, good cycle life and efficiency compared to Pb-acid, Ni-MH and Ni-Cd batteries. Despite these advantages, Li-ion batteries lack the high power density (rate performance) critical for many commercial applications. One of the main challenges is obtaining excellent rate capability while maintaining long cycle life and safety. The use of graphite anodes (theoretical capacity of 372 mAh/g) is one of the critical factors limiting the performance of current generation Li-ion batteries. Lithium-ion intercalation of graphite anodes at lower potentials (<0.2 V vs $Li^+/Li$) can also results in dendrite growth and associated short circuit. These drawbacks of graphite anodes triggered extensive research focused on the development of alternative high-performance and safer anode materials. Consequently, numerous efforts have been devoted to developing safe and high-performance anode materials. Conversion type transition metal oxides ($SnO_2$, $Fe_2O_3$, $Co_3O_4$, CoO, NiO, $MnO_2$, $MoO_3$, $WO_3$ etc.) and alloying type materials (Si, Ge, Sn etc.) have been investigated as high capacity anode materials. Despite of the high specific capacities, these conversion and alloying type electrodes experienced severe capacity fading on extended cycling. Transition metal oxides such as $TiO_2$, $V_2O_5$, $Nb_2O_5$, $TiNb_2O_7$ and $Li_4Ti_5O_{12}$ are investigated as intercalation type anodes.

Among these anodes, $TiO_2$ attracted significant interest due to its high chemical stability and a smaller volume change (<3%) during lithium insertion/ extraction. Moreover, the higher working voltage of $TiO_2$ (1.0-1.5 V vs $Li^+/Li$) eliminates the possibility of lithium plating that is commonly observed with graphite. Different polymorphs of $TiO_2$ such as anatase, bronze, brookite and rutile are investigated as potential anode materials. Bronze phase was identified as the electrochemically most active polymorph due to its layered structure that facilitates improved Li-ion diffusion. However, its application is limited due to its metastable nature, complicated synthetic methods and difficult to prepare phase pure composition.

Rutile $TiO_2$ is the most naturally abundant polymorph found in large quantities in beach sands and ore deposits. Rutile $TiO_2$ is also the most thermally stable polymorph, exhibiting lower total free energy than the metastable phases of anatase, bronze or brookite. It is characterized by $TiO_6$ octahedra with corner sharing and edge sharing oxygen atoms. Nevertheless, electrochemical performance of rutile $TiO_2$ is very low due to the lack of Li-ion diffusion pathways. Despite the many advantages, poor electronic and ionic conductivity of $TiO_2$ limits its application as a high-performance anode material. Various strategies including nanostructuring and hybrid formation with carbonaceous current collectors are implemented for improving the Li-ion storage performance of $TiO_2$ anodes. Hence, development of fast charging and high capacity $TiO_2$ anodes (especially most abundant rutile phase) with excellent cycling stability remains as a challenge.

WO 2014/140910 discloses a method for preparing acicular ordered aggregates of rutile $TiO_2$ crystallites. This document teaches the calcination of the particles as means for improving its properties since it will lead to the expansion of their pore structure.

H. D. Nam et al. reports a method for synthesizing a rutile-type titanium oxide using a low temperature wet process, but it leads to rutile-type titanium oxide aggregates, characterized by particle diameters of from 200 to 400 nm (retracted paper, H. D. Nam et al., Jpn. J. Appl. Phys., Vol. 37, Part 1(8), p.4603 (1998)). EP1785398A1 attempts to overcome these drawbacks, by disclosing rutile-type titanium oxide particles obtained in the presence of a chelating agent.

In S.R. Dhage et al. (Materials Letters 58 (2004) 2310-2313), the synthesis of rutile $TiO_2$ is described in two steps, the first being the synthesis of anatase $TiO_2$ at 100 °C and the second step being the calcination of the anatase phase to yield the rutile $TiO_2$ phase. When titanium is hydrothermally treated in an aqueous medium and subjected to calcination, rod-like crystals of rutile titanium dioxide having (110) and (111) faces are generally produced. Addition of steric stabilizers, such as polyvinylpyrrolidone (PVP) can help producing rod-like crystals with a crystal face (001).

WO2017/146649 explains why rutile $TiO_2$ is less suitable than anatase and bronze $TiO_2$ as anode material. Not only has rutile $TiO_2$ a low theoretical capacity of 33.5 mAh/g, but also because only a small fraction of lithiation sites are available since half of the interstitial octahedral sites are occupied to form coordinated $TiO_6$ octahedral.

Efforts to provide efficient Li-ion electrodes based on nanostructured materials have been ongoing since the past few years, especially those dealing with anatase and bronze phase $TiO_2$, which are promising candidates.

To the best knowledge of the inventors, no high performance battery has yet been demonstrated based on rutile $TiO_2$ anode.

BRIEF DESCRIPTION OF THE INVENTION

The authors of the present invention have surprisingly found that oxygen-deficient rutile $TiO_2$ nanostructured electrodes are capable of astonishing results. The electrode of the present invention is capable of exceptional ion storage performances, namely high capacity, excellent performance (charge-discharge rates) at high current densities, little to negligible capacity loss even upon tens of thousands of cycles and ultrafast charging times (less than 5 seconds in case of Li-ion battery system).

The main gist of the invention lies in the finding that rutile $TiO_2$ nanowires, when not submitted to the common procedure of calcination, present structural defects which are responsible for such results.

Therefore, in a first aspect, the invention provides an electrode comprising oxygen-deficient rutile $TiO_2$ nanowires, wherein the nanowires are characterized by:

- a width comprised between 3 and 10 nm;
- a length comprised between 50 and 500 nm; and
- a high-resolution O 1s XPS signal between 530.5 and 535.0 eV.

In a second aspect, a method for the preparation of the oxygen-deficient rutile $TiO_2$ nanowires of the invention is contemplated, comprising the step of reacting a titanium precursor in a mixture of water and an organic solvent in acidic medium for at least 1 hour at a temperature comprised between 100 and 200 °C.

In a third aspect, the invention is directed at oxygen-deficient rutile $TiO_2$ nanowires obtainable according to the method of the invention.

In a fourth aspect, the invention is directed at a rechargeable battery, comprising:

a. a first electrode according to the electrode of the invention or a first electrode which comprises the nanowires obtainable according to the method of the invention;
b. a second electrode; and
c. an electrolyte between the first and second electrodes.

In a fifth aspect, the invention is directed at the use of the oxygen-deficient rutile $TiO_2$ nanowires of the invention in an electrochemical cell, a solar cell, an electrochemical capacitors, an oxygen sensors and a water-splitting photocatalyst.

These and other characteristics and advantages of the invention will become clearly understood in view of the detailed description of the invention which becomes apparent from preferred embodiments of the invention, given just as an example and not being limited thereto, with reference to the drawings.

BRIEF DESCRIPTION OF THE DRAWINGS

Figure 1 shows the X-ray diffraction pattern of the oxygen-deficient rutile $TiO_2$ nanowires of the invention (X-ray radiation $CuK\alpha=0.15418$ nm).

Figure 2 shows the Raman spectrum of the oxygen-deficient rutile $TiO_2$ nanowires of the invention.

Figure 3 shows Transmission Electron Microscopy images of the oxygen-deficient rutile $TiO_2$ nanowires of the invention (a, b, c) and the corresponding images of the stoichiometric rutile $TiO_2$ nanowires (d, e, f).

Figure 4 shows BET Nitrogen adsorption-desorption isotherms of the oxygen-deficient rutile $TiO_2$ nanowires of the invention.

Figure 5 shows BJH pore size distribution oxygen-deficient rutile $TiO_2$ nanowires of the invention.

Figure 6 shows high-resolution Ti 2p XPS pattern of the oxygen-deficient rutile $TiO_2$ nanowires of the invention.

Figure 7 shows high-resolution O 1s XPS pattern of the oxygen-deficient rutile $TiO_2$ nanowires of the invention.

Figure 8 shows electron paramagnetic resonance (EPR) spectrum of the oxygen-deficient rutile $TiO_2$ nanowires of the invention.

Figure 9 shows galvanostatic rate performance of Li-ion half-cell containing electrode of the invention.

Figure 10 shows the galvanostatic cycling stability of a Li-ion half-cell containing electrode of the invention at 1, 10 and 50 A/g current densities.

Figure 11 shows the galvanostatic discharge profiles (potential vs time) of a Li-ion half-cell containing electrode of the invention at current densities of 10 and 50 A/g.

Figure 12 shows galvanostatic charge/discharge voltage profiles of a Li-ion half-cell containing electrode of the invention at different current densities (0.05 to 100 A/g). The potential range was set to 1.0-3.0 V (vs. $Li^+/Li$).

Figure 13 shows cyclic voltammograms of a Li-ion half-cell containing electrode of the invention at various scan rates.

Figure 14 shows the capacitive contribution of electrode of the invention in a Li-ion half-cell at various scan rates.

Figure 15 shows the cycle stability of a Mg-battery comprising an electrode of the invention at different current densities.

Figure 16 shows the cycling stability of Mg-battery comprising an electrode of the invention at a current density of 1 A/g.

Figure 17 shows cyclic voltammograms of a Mg-battery containing electrode of the invention at various scan rates.

Figure 18 shows the capacitive contribution of electrode of the invention in a Mg-battery at various scan rates.

Figure 19 shows X-ray diffraction pattern of the oxygen-deficient rutile $TiO_2$ nanowires of the invention (X-ray radiation CuKα=0.15418 nm) at different charge-discharge states: 1 - rutile $TiO_2$ at 0V discharge; 2 - rutile $TiO_2$ at 1V charge; 3 - rutile $TiO_2$ at 2V charge (open circuit voltage); 4 - rutile $TiO_2$ at 1V discharge; 5 - rutile $TiO_2$ at 0V discharge.

## DETAILED DESCRIPTION OF THE INVENTION

Up until now, rutile $TiO_2$ was considered electrochemically inactive compared to anatase or bronze $TiO_2$ as anode material for electrodes. The present invention introduces a paradigm shift and provides rutile $TiO_2$ considered as electrochemically active compared to anatase or bronze $TiO_2$ as anode material nanostructure-based electrodes, capable of exceptional ion storage performances, as high as 420 mAh/g, stability to very high current densities such as 100 A, little to negligible capacity loss of around 10% even upon tens of thousands of cycles (30000) and ultrafast charging times under less than 5 seconds.

The main gist of the invention lies in the finding that structural defects present in the rutile $TiO_2$ nanowires are responsible for the above mentioned excellent electrochemical performances.

### Terminology and clarification

For the sake of clarity, the following terms are explained:

"Electrode": The term "electrode" is to be interpreted as an electrical conductor used to make contact with a nonmetallic part of a circuit. An electrode in an electrochemical cell is referred to as either an "anode" or a "cathode", wherein the anode is defined as the electrode at which electrons leave the cell and oxidation occurs (indicated by a minus symbol, "-") when the cell is discharging, and the cathode as the electrode at which electrons enter the cell and reduction occurs (indicated by a plus symbol, "+") when the cell is discharging. In a rechargeable battery, each electrode may become either the anode or the cathode depending on the direction of current through the cell.

"Rutile": The term "rutile" refers to a polymorphic form of $TiO_2$.

"Nanowires": The term "nanowires" is a qualitative term and serves to distinguish the material of the present invention from other nanostructures. In the context of the present invention, a nanowire is to be interpreted as an elongated structure of nanometric dimensions, with a width within the order of nanometers ($10^{-9}$ meters), under 20 nanometers width, preferably under 10 nm width. The term is to be associated with a structure, which has a length to width ratio greater than 5, preferably greater than 15. These values put the material of the present invention within the terminology of nanowires. Alternatively, the nanowires can be defined as structures that have a width or diameter constrained to a value lower than 20 nanometers or less and an unconstrained length. In the context of the present invention, width and length values of the nanowires are given as measured transmission electron microscopy (TEM) imaging, preferably at an acceleration voltage between 200 and 300 kV.

"Width": Unless stated otherwise, the term "width" is synonym to diameter and thickness.

"Oxygen deficiency": The term is used to describe the $TiO_2$ material of the invention which is not found in a perfect 1:2 Ti:O stoichiometric ratio but rather described as comprising a $TiO_x$ structure, wherein x is comprised between 1 and less than 2, and wherein the value below 2 represents oxygen vacancy present in the system.

The value of index "x" can be calculated from the oxygen vacancy concentration.

The "oxygen vacancy concentration" is calculated as percentage by the ratio between:

- the area of the oxygen vacancy peak in between 530.5 and 532.5 eV, deconvoluted from the broad peak between 530.5 and 535.0 eV, to the lattice oxygen peak in between 527.5 and 532.2 eV, or
- the area of the peak from 462.0 eV to 466.0 eV, centered at 463.69 eV, and the low intensity intermediate energy peak from 460.0 to 463.8 eV, centered at 461.85 eV, in the O Is high resolution XPS spectra.

The oxygen vacancy concentration is correlated with x in TiOx using the following formula:

$$\text{Oxygen vacancy concentration} = ((2-x)/2)*100$$

For example, for an oxygen vacancy concentration of 15%, the concentration of remaining oxygen atoms in the molecule should be 85%, and therefore, x would be 1,7 ($TiO_{1.7}$) according to the above formula. Similarly, a value of x equal to 1 corresponds to an oxygen vacancy concentration of 50% and x equal to 2 corresponds to 0%.

Spectroscopic techniques: The term "XPS" means X-ray photoelectron spectroscopy; the term "XRD" means X-ray diffraction; the term "HR-XPS" means high resolution X-ray photoelectron spectroscopy; the term "EPR" means electron paramagnetic resonance; the term "TEM" means transmission electron microscopy.

"BET": The term "BET" refers to the Brunauer-Emmett-Teller method for determining surface areas of nanometric structures by means of nitrogen adsorption.

"BJH": The term "BJH" stands for Barrett-Joyner-Halenda method, which is a method used for determining pore sizes (also referred to as pore diameters) and pore volumes of nanometric structures

Bracketed characters such as "(101)", for example, are not reference characters of a figure but solely refer to the crystal plane of the $TiO_2$ material.

"Shoulder": The term "shoulder" is used to describe a particular type of spectroscopic signal (or peak) which is characterized by being a peak overlapped by a more intense peak. When a peak overlaps with another, less intense one, this generally appears as a band, which can be deconvoluted to yield two Gaussian curves, one for each peak.

"Battery": the term "battery" is to be interpreted as a device comprising one or more electrochemical cells with external connections provided to power electrical devices.

When a numerical value is provided, it contemplates both the exact value disclosed and the rounded value to the last disclosed decimal. For example, the value 529.3 includes any value comprised in the range between 529.25 and 529.34.

Electrode material of the invention

In a first aspect, the invention provides an electrode comprising oxygen-deficient rutile $TiO_2$ nanowires, wherein the nanowires are characterized by:

- a width comprised between 3 and 10 nm;
- a length comprised between 50 and 500 nm; and
- a high-resolution O 1s XPS signal between 530.5 and 535.0 eV.

In the present invention, the electrode comprises oxygen-deficient rutile $TiO_2$ nanowires.

The invention also encompasses embodiments wherein the electrode further comprises a conductive carbon and polymeric binder additives. The electrode resulting from this embodiment can be considered as a composite electrode.

The conductive carbon additive can be selected from the group of acetylene black, Kentjen black, channel black, activated carbon, furnace black, lamp black, thermal black and combinations thereof; preferably acetylene black.

The binder additive can be selected from the group of PVDF (polyvinylidene fluoride), PTFE (polytetrafluoroethylene), CMC (carboxymethyl cellulose)-SBR (styrene-butadiene), CMC-citric acid, PAA (polyacrylic acid) or combinations thereof; preferably PVDF.

A composite electrode according to the present invention may be formed of an oxygen-deficient rutile $TiO_2$ active material in the range of 60 to 80 wt%, a conducting carbon additive in the range of 10 to 20 wt% and a polymeric binder additive in the range of 10 to 20 wt%.

The composite electrode may be formed by mixing the above solid ingredients in N-methyl-2-pyrrolidone (NMP), dimethylformamide (DMF) or water, preferably in a ratio of 70:20:10.

In another preferred embodiment, the composite electrode further comprises a coating selected from freshly polished copper foil, aluminum foil, stainless steel foil and carbon paper, preferably selected from copper foil and stainless steel foil.

Preferably, the composite electrode according to the present invention is subsequently dried at temperatures in the range of 80 to 100 °C for 4 to 6 hours under vacuum.

The rutile $TiO_2$ nanowires of the invention may be nanowires of oxygen-deficient single phase rutile $TiO_2$, wherein said single phase rutile $TiO_2$ may be anion doped, cation doped or undoped, preferably undoped.

In a particular embodiment of the invention, the oxygen-deficient rutile $TiO_2$ nanowires may be surface coated with a carbon coating, a metal oxide or metal sulfide coating. However, the oxygen-deficient rutile $TiO_2$ nanowires are preferably free from a coating layer.

The oxygen-deficient rutile $TiO_2$ nanowires of the invention can be oriented in any axis, preferably characterized by a c-axis orientation.

Within the width comprised between 3 and 10 nm, the oxygen-deficient rutile $TiO_2$ nanowires of the invention may also be characterized by a width that is greater than 3, 4, 5, 6, 7, or 8 nm, but less than 10 nm. In a preferred embodiment, the oxygen-deficient rutile $TiO_2$ nanowires are characterized by a width comprised between 4 and 8 nm, preferably between 5 and 7 nm.

The oxygen-deficient rutile $TiO_2$ nanowires of the invention may also be characterized by a length, which is greater than 50, 60, 70, 80, 90 and 100 nm, but less than 500 nm. In a preferred embodiment, oxygen-deficient rutile $TiO_2$ nanowires are characterized by a length comprised between 50 and 350 nm, preferably between 50 and 250 nm, even more preferably between 50 and 200 nm. The nanowires of the invention can also be characterized by a length comprised between 75 and 125 nm.

The peak between 530.5 and 535.0 eV, which is present in an oxygen O 1s high-resolution X-ray photoelectron spectra (HR-XPS) of the nanowires, is associated to oxygen deficiencies in the $TiO_2$ rutile structure. High-resolution O 1s X-ray photoelectron spectra upon deconvolution can also be found within a narrower range comprised between 530.5 and 532.5 eV with the maximum intensity at 531.4 eV.

In this way, the $TiO_2$ nanowires present in the electrode are oxygen-deficient rutile $TiO_2$.

The oxygen deficiencies of the $TiO_2$ nanowires of the invention are responsible for the high-resolution O 1s X-ray photoelectron spectroscopy peak from 530.5 to 535.0 eV, which can be described as a broad band comprising a peak from 530.5 to 532.0eV, 532.0 to 534.0 eV and 532.0 to 535.4 eV. HR-XPS peak from 530.5 to 532.5 eV, which in a particular embodiment is found the maximum intensity at 531.4 eV after deconvolution of the broad band, is an indication of oxygen vacancies. Also, the peak between 532.0 and 534.0 eV which in a particular embodiment is found the maximum intensity at 532.4 eV after deconvolution of the broad band, represent chemisorbed oxygen on the nanowire generated by the *In-situ* dissociation of water or organic leftovers at the active sites. The very broad peak between 532.0 and 535.4 eV, which in a particular embodiment is found the maximum intensity at 533.4 eV after deconvolution of the broad band represent the surface adsorbed moisture.

The $TiO_2$ crystal lattice oxygen atoms are responsible for a second high-resolution O Is XPS peak from 527.5 to 532.2 eV, which in a particular embodiment is found the maximum intensity at 529.31 eV.

In a particular embodiment of that described in the previous paragraphs, the high-resolution O Is X-ray photoelectron spectroscopy spectrum of the oxygen-deficient rutile $TiO_2$ nanowires of the invention is such that the ratio between the areas of oxygen vacancy peak in between 530.5 and 532.0 eV and the $TiO_2$ crystal lattice oxygen band in between 527.5 and 532.2 eV is from 0.11 to 0.19, preferably from 0.145 to 0.155. This ratio is calculated from the areal comparison of the two bands obtained after doing a deconvolution of the broad band from 530.5 to 535.0 eV.

In a particular embodiment, oxygen vacancy concentration of the oxygen-deficient rutile $TiO_2$ nanowires of the present invention was found to be comprised between 10% and 25%, which includes the narrower range of between 12% and 20%, between 14% and 15%, even including a particular embodiment where it is 14.5%, calculated from the ratio between the area of the oxygen vacancy peak from 530.5 to 532.5 eV, deconvoluted from the broad peak between 530.5 and 535.0 eV and the $TiO_2$ crystal lattice oxygen peak in between 527.5 and 532.2 eV. Accordingly, in this particular case, the value of index "x" in formula $TiO_x$ would be comprised between 1.50 and 1.80, particularly between 1.60 and 1.76, more particularly between 1.70 and 1.72, and even more particularly x is 1.71.

In a particular embodiment of the electrode of the invention, the oxygen-deficient rutile $TiO_2$ nanowires are characterized by a lower energy peak from 456.2 to 459.8 eV, with a maximum intensity at 458.06 eV, an intermediate energy peak from 460.0 to 463.8 eV with maximum intensity at 461.85 eV and an upper energy peak in between 462.0 eV and 466.0 eV with maximum intensity at 463.69 eV present in a titanium Ti 2p high resolution X-ray photoelectron spectroscopic analysis of the nanowires.

XPS peak between 460.0 and 463.8 eV with maximum intensity at 461.85 eV is characteristic of $2P_{1/2}$ electrons of $Ti^{3+}$ species. Peak from 456.2 to 459.8 eV, with maximum intensity at 458.06 eV represent $2P_{3/2}$

electrons and the peak in between 462.0 eV and 466.0 eV with maximum intensity at 463.69 eV is characteristic of $2P_{1/2}$ electrons of $Ti^{4+}$ species.

These signals thus also allow calculating the oxygen vacancy concentration of the $TiO_2$ nanowires of the invention.

In this way, when the above two signals appear in the Ti 2p high resolution X-ray photoelectron spectroscopic analysis of the nanowires, it can be said that the $TiO_2$ nanowires are oxygen deficient. Oxygen vacancy concentration of the material of the present invention was found to be comprised between 10% and 25%, which includes the narrower range of between 12% and 20%, between 14% and 15%, even including a particular embodiment where it is 14.5%, calculated from the areal comparison of the intermediate peak found at from 460.0 to 463.8 eV with maximum intensity at 461.85 eV representing $2P_{1/2}$ electrons of $Ti^{3+}$ species and the upper energy peak in between 462.0 eV and 466.0 eV with maximum intensity at 463.69 eV representing $2P_{1/2}$ electrons of $Ti^{4+}$ species. Accordingly, in this particular case, the value of index "x" in formula $TiO_x$ would be comprised between 1.50 and 1.80, particularly between 1.60 and 1.76, more particularly between 1.70 and 1.72, and even more particularly x is 1.71. The presence of oxygen vacancies in the oxygen-deficient rutile $TiO_2$ nanowires of the invention is further confirmed by means of electron paramagnetic resonance (EPR) spectroscopy, wherein the electrode of the invention is characterized by a sharp resonance signal with a g factor in the range of 2.00 to 2.02 caused by the substantial amount of superoxide radicals ($O_2^-$) generated by the unpaired electron trapped at the oxygen vacancies. As mentioned throughout the description, the nanowires of the invention comprise oxygen-deficient rutile $TiO_2$. Therefore, the electrode of the invention is characterized in that the $TiO_2$ nanowires have a crystallite size comprised between 4 and 8 nm, calculated applying the Scherrer equation (Q.H. Zhang, et al., Appl. Catal. B, 2000 26, 207-215) to the X-ray diffraction pattern of the nanowires. The equation is explained in the examples section below. Said crystallite size, when described in a narrower range, has a crystallite size of 4-8 nm, narrower of 5-7 nm, or even narrower of 6 nm.

The surface area of the oxygen-deficient $TiO_2$ nanowires of the invention was determined to be high by the nitrogen adsorption Brunauer-Emmett-Teller method (BET). In a particular embodiment, the electrode of the invention is characterized in that the $TiO_2$ nanowires have a surface area comprised between 100 $m^2/g$ and 300 $m^2/g$, which in a narrower range can be described as being comprised between 150 and 175 $m^2/g$, measured by the nitrogen adsorption Brunauer-Emmett-Teller method.

By means of the Barrett-Joyner-Halenda method (BJH), the oxygen-deficient $TiO_2$ nanowires of the invention were found to have a very narrow pore diameter distribution. In a particular embodiment, the electrode of the invention is characterized in that the oxygen-deficient

$TiO_2$ nanowires have a pore diameter distribution of less than 5 nm, and in a more particular embodiment less than 2 nm, and in an even more particular embodiment, the pore diameter distribution is less than 1 nm, as measured according to the Barrett-Joyner-Halenda method. These values are indicative that the nanowires of the invention, at least more than 50% of the nanowires, preferably more than 85%, even more preferably more than 95%, are nonporous $TiO_2$ nanowires. In a most preferred embodiment, the nanowires of the invention can be defined as being non-porous $TiO_2$ nanowires.

The electrode of the present invention can be further described by the d-spacing of the crystalline lattice structure. In a particular embodiment, the electrode of the invention is characterized in that the oxygen-deficient $TiO_2$ nanowire crystallites preferentially grew in the thermodynamically favorable (lowest Gibbs energy) (001) direction of rutile (c-axis) exhibiting (110) faces with a d-spacing of from 0.30 to 0.38 nm, which can be described in a narrower range as 0.33 to 0.35 nm, particularly 0.34 nm.

When the oxygen-deficient $TiO_2$ nanowires of the invention are submitted to X-ray irradiation of CuK$\alpha$ at 0.15418 nm, an X-ray diffraction pattern has peaks at $2\theta=27.5°$ (110), $2\theta=36°$ (101) and $2\theta=54°$ (211), wherein the bracketed values are the corresponding crystal lattice planes.

In fact, the X-ray diffraction pattern of the oxygen-deficient $TiO_2$ nanowires is further characterized by peaks at $2\theta=41.5°$ (111), $2\theta=44°$ (210), $2\theta=56°$ (220), $2\theta=63°$ (002), $2\theta=69°$ (301) and $2\theta=70°$ (112), when the X-ray radiation is that of CuK$\alpha$ at 0.15418 nm, wherein the bracketed values are the corresponding crystal lattice planes.

In a particular embodiment, the X-ray diffraction pattern of the nanowires of the invention, which comprises the 9 peaks identified above, is indication that the nanowires are phase-pure rutile $TiO_2$ nanowires. Therefore, in a particular embodiment of the invention, the nanowires are phase-pure rutile $TiO_2$ nanowires.

As regards Raman characterization of the oxygen-deficient $TiO_2$ nanowires of the invention, the electrode of the invention is characterized in that the $TiO_2$ nanowires have bands from 232 to 240 cm$^{-1}$, from 442 to 450 cm$^{-1}$, from 604 to 608 cm$^{-1}$, and from 697 to 701 cm$^{-1}$, present in a Raman spectroscopic analysis of the nanowires.

The electrode of the invention can also be thought of as an anode, when it is in a cell, which is in the process of discharging.

It is the intent of this disclosure to explain that all of the particular embodiments described above can be combined in any combination because they all refer to different means for describing the technical features of the nanowires of the invention.

In a preferred embodiment of the invention, the $TiO_2$ nanowires are characterized by the following combination of particular embodiments:

a) the $TiO_2$ nanowires are phase-pure oxygen-deficient rutile $TiO_2$;
b) a high-resolution O Is XPS signal between 530.5 and 535.0 eV which can be deconvoluted into individual peaks from 530.5 to 532.5eV, 532.0 to 534.0 eV and 532.0 to 535.4 eV;
c) the $TiO_2$ nanowires are further characterized by an intermediate energy peak from 460.0 to 463.8 eV, and particularly with maximum intensity at 461.85 eV, a lower energy peak from 456.2 to 459.8 eV, and particularly with maximum intensity at 458.06 eV and an upper energy peak in between 462.0 eV and 466.0 eV, and particularly with maximum intensity at 463.69 eV, present in a titanium Ti 2p high resolution X-ray photoelectron spectroscopic analysis of the nanowires; and
d) an oxygen vacancy concentration comprised between 12% and 20%, calculated from the areal comparison between:

- the intermediate energy band from 460.0 to 463.8 eV with maximum intensity at 461.85 eV and upper energy band in between 462.0 eV and 466.0 eV with maximum intensity at 463.69 eV representing the Ti $2p_{1/2}$ electrons of $Ti^{3+}$ and $Ti^{4+}$ oxidation states in the Ti 2p spectrum; or
- the oxygen vacancy peak in between 530.5 and 532.5 eV and the $TiO_2$ crystal lattice oxygen peak in between 527.5 and 532.2 eV in O Is spectrum.

In addition to the former, or alternatively, the oxygen-deficient $TiO_2$ nanowires are characterized by the following combination of particular embodiments:

f) the $TiO_2$ nanowires have a crystallite size comprised between 5 and 7 nm, more preferably 6 nm;
g) the $TiO_2$ nanowires have a surface area comprised between 150 and 175 m$^2$/g; and
h) the $TiO_2$ nanowires have a crystalline lattice structure with a d-spacing of from 0.33 to 0.35 nm.

Advantageous effects of the oxygen-deficient rutile $TiO_2$ nanowires

As herein disclosed, the electrode of the invention, which comprises oxygen-deficient rutile $TiO_2$ nanowires as described above, is capable of exceptional performances in ion storage, resistance to very high current densities, little capacity loss and ultrafast charging times. In a particular embodiment of the invention, these properties can be related to when the electrode is working as a Lithium, Magnesium or Sodium storage electrode, more particularly as anode. However, it is also within the scope of the invention the possibility of using the electrode of the invention in additional systems selected from the group consisting of K-ion, Li-$O_2$, Na-$O_2$, Mg-$O_2$, Li-

S, Na-S, Mg-S batteries, a hybrid battery of Li/Mg or Li/Na or Mg/Na.

In a particular embodiment of the invention, the electrode is characterized in that it stores from 1.2 to 1.3 mol of Li-ions, preferably about 1.25 mol Li-ions. In a further embodiment, the electrode is characterized in that it has a Li-ion storage specific capacity of from 350 to 480 mAh/g, preferably from 400 to 440 mAh/g, even more preferably 420 mAh/g, at 0.05 A/g current density.

The electrode is further capable of storing Li-ions through a diffusion-independent pseudocapacitive process, preferably 86% at 1mV/s and 97% at 10 mV/s.

In a particular embodiment of the ones above, the electrode is characterized in that it operates at a current density of up to 150A, preferably up to 100A.

With these performances, the electrode of the invention is further characterized in that it charges to maximum charge in less than 15 seconds, preferably less than 5 seconds, even more preferably in less than 3 seconds. The skilled person readily understands that the charging time will depend on the current density, which in the case of the present invention can be up to 150A, preferably up to 100A.

With such ultrafast charging times, it is possible to quickly run a cell comprising the electrode of the invention to a great number of charging and discharging cycles. In this way, in a particular embodiment of the invention, the electrode is characterized in that after 30,000 cycles of charging-discharging a Li-ion battery, the maximum charge is at 80%, preferably 85%, more preferably 90% of the charge at cycle 2. Accordingly, 30000 cycles correspond to roughly 80 years of continued use, which is a clear evidence of the relevance of the invention and of its industrial applicability.

It was noticed that when undergoing Li-ion storage processes, the electrode of the invention undergoes irreversible transitions from crystalline to amorphous during ion storage process, preferably during Li-ion storage processes.

As stated above, the electrode can also be used for Mg-ion storage. In a particular embodiment, the electrode of the invention is characterized in that it has an Mg-ion specific capacity of from 180 to 250 mAh/g, preferably from 190 to 220 mAh/g, more preferably of 210 mAh/g at 50 mA/g current density.

In a particular embodiment, the electrode of the invention is characterized in that it has an Mg-ion specific capacity of from 50 to 60 mAh/g, preferably 52 to 58 mAh/g, even more preferably of 56 mAh/g, at a current density of from 0.9 to 1.1A, preferably at a current density of 1A/g.

In a particular embodiment, the electrode of the invention is characterized in that it stores Mg-ions through a diffusion-independent intercalation pseudocapacitive process, preferably 65% at 1mV/s and 82% at 10 mV/s.

The electrode of the invention was also shown to perform well with Mg ions. In a particular embodiment, after 2000 cycles of charging-discharging an Mg-ion battery, the maximum charge is at 80%, preferably 85%, more preferably 90% of the charge at cycle 2.

It was found that the $TiO_2$ nanowires present in the electrode of the invention, are characterized in that it they do not undergo structural changes during Mg-ion insertion.

Method for the preparation of the oxygen-deficient rutile $TiO_2$ nanowires of the invention

The oxygen-deficient rutile $TiO_2$ nanowires used in the electrode of the invention can be prepared by means of solvothermal synthesis.

Thus, in a second aspect, a method for the preparation of the oxygen-deficient rutile $TiO_2$ nanowires is contemplated, comprising the step of reacting a titanium precursor in a mixture of water and an organic solvent in acidic medium for at least 1 hour at a temperature comprised between 100 and 200 °C.

In the context of the present invention, soluble titanium precursors useful according to the described method include, but are not limited to, titanium oxychloride ($TiOCl_2$), titanium oxybromide ($TiOBr_2$), titanium oxyiodide ($TiOI_2$), titanium oxynitrate ($TiO(NO_3)_2$), titanium tetrachloride ($TiCl_4$), titanium trichloride ($TiCl_3$), titanium tribromide($TiBr_3$), titanium oxalate ($Ti_2(C_2O_4)_3$), potassium hexafluorotitanate($K_2TiF_5$), ammonium hexafluorotitanate ($(NH_4)_2TiF_6$), potassium titanyloxolate ($K_2TiO(C_2O_4)_2$), ammonium titanyloxolate ($(NH4)_2TiO(C_2O_4)_2$), titanium bis(ammonium lactate) dihydroxide ($[CH_3CH(O)COONH_4]_2Ti(OH)_2$), and mixtures thereof.

In a particular embodiment disclosed in the examples, the titanium precursor is $TiCl_4$.

In a particular embodiment of the method of the invention, the organic solvent is selected from ethylene glycol, di-ethylene glycol, tri-ethylene glycol, poly-ethylene glycol, toluene, glycerol, ethanol, methanol, propanol, butanol and mixtures therefrom, preferably ethylene glycol.

In the context of the present invention, acids useful according to the described method include, but are not limited to hydrochlroridric acid, nitric acid, sulfuric acid, acetic acid, citric acid and mixtures thereof.

In addition, the oxygen-deficient rutile $TiO_2$ nanowires of the invention can be prepared after a reaction time of at least 4 hours, preferably of at least 6 hours.

The skilled person will readily identify a temperature for carrying out the method of the invention, but it is important that the temperature does not surpass 200 °C. Thus, in a preferred embodiment, the method is characterized in that it does not comprise a step of heating above 200 °C. In a particular embodiment, the reaction temperature is comprised between 120 and 180 °C, preferably between 140 and 160 °C.

Once the reaction is over, the oxygen-deficient rutile $TiO_2$ nanowires can be isolated in the form of a precipitate. The precipitates were isolated by means of centrifuge method, gravitational settling or filtering.

If isolated, the nanowires can be further washed to remove any unreacted reagents and solvents. In a particular embodiment, the isolated oxygen-deficient rutile $TiO_2$ nanowires are washed with water and an organic solvent selected from ethanol, acetone, isopropyl alcohol, methanol, butanol, and mixtures therefrom; preferably in ethanol.

Oxygen-deficient rutile $TiO_2$ nanowires obtainable according to the method of the invention

As an alternative to the structural features described in detail above, the oxygen-deficient rutile $TiO_2$ nanowires can also be described by their method of preparation.

In this way, in a third aspect, the invention is directed at oxygen-deficient rutile $TiO_2$ nanowires obtainable according to the method of the invention.

In this disclosure, it is intended that all of the structural and morphological features and all of the spectroscopic characteristics described above for the material of the invention are applicable to the oxygen-deficient rutile $TiO_2$ nanowires obtainable according to the method of the invention.

Electrochemical cell and battery comprising the oxygen-deficient rutile $TiO_2$ nanowires of the invention

The electrode of the invention, which comprises the oxygen-deficient rutile $TiO_2$ nanowires of the invention, is an electrical conductor. Therefore, the invention also contemplates an electrochemical cell comprising the electrode of the invention, and further, a battery, optionally rechargeable battery, which comprises at least one of said electrochemical cell.

In this way, the invention also contemplates an electrochemical cell, comprising

  a. a first electrode according to the electrode of the invention or a first electrode which comprises the oxygen-deficient rutile $TiO_2$ nanowires obtainable according to the method of the invention;
  b. a second electrode; and
  c. an electrolyte between the first and second electrodes.

It is usually known in the art that an electrode is an anode if it is where oxidation occurs during the process of discharge. In a particular embodiment, the first electrode is an anode.

The first electrode referred to in the previous two paragraphs is the electrode of the first aspect of the invention. This means that every single piece of information disclosed herein relative to the first aspect of the invention, especially the particular and preferred embodiments disclosed above, is to be interpreted as applicable to the first electrode of the electrochemical cell of the invention.

The invention further contemplates a battery comprising the above-described electrochemical cell.

In this way, in a fourth aspect, the invention is directed at a battery comprising at least an electrochemical cell of the invention. In this fourth aspect, the invention is directed at a rechargeable battery, comprising:

  a. a first electrode according to the electrode of the invention or a first electrode which comprises the oxygen-deficient rutile $TiO_2$ nanowires obtainable according to the method of the invention;
  b. a second electrode; and
  c. an electrolyte between the first and second electrodes.

The battery is a rechargeable battery. In addition, the battery of the invention is envisioned as a rechargeable battery comprising a plurality of cells.

In addition to being rechargeable, it is preferably a battery wherein the electrochemical cell is selected from the group consisting of Li-ion, Mg-ion, Na-ion, Li-$O_2$, Na-$O_2$, Mg-$O_2$, Li-S, Na-S, Mg-S batteries, a hybrid battery of Li/Mg or Li/Na or Mg/Na; preferably Li-ion, Na-ion or Mg-ion cells. Thus, in a preferred embodiment of the fourth aspect of the invention, the rechargeable battery is a Li-ion, Mg-ion or Na-ion battery.

In a particular embodiment of the fourth aspect of the invention, the first electrode is an anode and that the second electrode is a cathode.

Use of the electrode material of the invention

As described, above and exemplified below, the oxygen-deficient rutile titanium oxide nanowires as described above allow the provision of an electrode capable of surprising advantageous results in its performance. The electrode can find different uses, not only in batteries but also in solar cells, electrochemical capacitors, oxygen sensors, water-splitting catalysts.

In this way, a fifth aspect of the invention is directed at the use of oxygen-deficient rutile $TiO_2$ nanowires, wherein the nanowires are characterized by:

- a width comprised between 3 and 10 nm;
- a length comprised between 50 and 500 nm; and
- a high resolution O 1s XPS signal between 530.5 and 535.0 eV;

in an electrochemical cell, a solar cell, an electrochemical capacitor, an oxygen sensor and a water-splitting catalyst.

The $TiO_2$ nanowires used in the fifth aspect of the invention are the very same nanowires used in the electrode of the first aspect of the invention. This means that every single piece of information disclosed herein relative to the first aspect of the invention, especially the particular and preferred embodiments disclosed above, is to be interpreted as applicable to the nanowires used in the fifth aspect of the invention.

Preferably, the nanowires are used in an electrochemical cell.

The nanowires are comprised within an electrode. In this way, the use of the invention in an electrochemical cell, a solar cell, an electrochemical capacitor, an oxygen sensor and a water-splitting catalyst can also be contemplated as the use of an electrode of the invention comprising the rutile nanowires.

EXAMPLES

Method for preparing an electrode

The negative electrode may be prepared by, for example, molding a negative active material composition including a negative active material, a binder, and optionally, a conductive agent in a set or predetermined shape, or coating the negative active material composition on a current collector such as a copper foil.

In one embodiment, a negative active material composition including a mixture of a negative active material, a conductive agent, a binder, and a solvent is prepared. The negative active material composition is directly coated on a metal current collector to manufacture a negative electrode plate. Alternatively, the negative active material composition may be cast on a separate support, and then a film may be peeled off from the support and then laminated on a metal current collector to manufacture a negative electrode plate. The form of the negative electrode is not limited to the forms listed above in embodiments of the invention and may differ from the forms described above.

The negative active material composition may further include a negative electrode material conventionally used as the negative active material in a lithium battery of the related art, in addition to the negative active material described above. For example, the negative active material composition may further include at least one selected from the group consisting of lithium metal, a metal alloy able with lithium, a transition metal oxide, a non-transitional metal oxide, and a carbonaceous material.

As described in detail in the method of the invention, and defined by the claims, the invention also allows a method for the preparation of the $TiO_2$ material that is extremely simple and cost-effective.

XRD measurements were performed using a PANalytical Empyrean instrument, the conditions being under CuKα radiation (λ=1.5406 Å) for $2\theta$ values in the range 20-80 degree. Details of the X-ray diffraction pattern analysis conditions are as below:

- Model of Instrument: Empyrean (manufacturer: PANalytical).
- Maximum voltage/current: 60kV/60mA.

- Minimum Step Size: 0.0016°2teta range: +20 to + 80 °
- Diffractometer Diameter: 480 mm
- Measurement condition: scan rate 0.4 °/minuteA

Raman Spectrometer (RENISHAW inVia) was used. Raman microscope equipped with Nd: YAG laser (532 nm). Laser power adjusted to ~5mW.

TEM imaging was obtained using a Model Titan (manufacturer: FEI). The conditions were as follows: acceleration voltage of 200 and 300 kV.

BET and BJH measurements were performed according to ASTM C1069-09.

XPS measurements were obtained using a Thermo Scientific Multilab 2000 instrument, fitted with a dual-anode X-Ray source (Mg K alpha and A1 K-alpha with photon energies 1253.6 and 1486.7 eV respectively), and a 110 mm hemispherical sector analyzer.

Survey spectra and detailed core level spectra were measured using both X-ray sources. All the measurements were performed on as received wafers with no $Ar^+$ sputtering cleaning. Ti 2p and O Is patterns were collected with respect to the C Is reference (284.8 eV) binding energy. EPR measurements were performed using a Bruker EMX instrument, the conditions being at liquid nitrogen temperatures.

Precursor $TiCl_4$ (0.09M solution in 20% HCl), ethylene glycol, were purchased at Acros organics and Fisher scientific with 99.9% and 99.5 % purity and used without further purification.

**Example 1.** Preparation of exemplary oxygen-deficient rutile $TiO_2$ nanowires.

Oxygen-deficient rutile $TiO_2$ nanowires were synthesized through a solvothermal method using $TiCl_4$ as precursor (0.09 M in HCl) in ethylene glycol. In a typical experiment, 6.7 vol% of 0.09M $TiCl_4$ solution in 20% HCl were added dropwise into a mixture of 86.4 vol% mL ethylene glycol and 6.7 vol% deionized water. The solution obtained was then transferred to a teflon lined stainless steel autoclave and heated to 150 °C for 6 hours. A white precipitate was washed several times with deionized water-ethanol (1:1) mixture and dried under vacuum at 80 °C overnight to yield ultrathin defect-rich (oxygen vacancies) rutile $TiO_2$ nanowires.

**Example 2.** Characterization of the exemplary oxygen-deficient rutile $TiO_2$ nanowires obtained according to example 1.

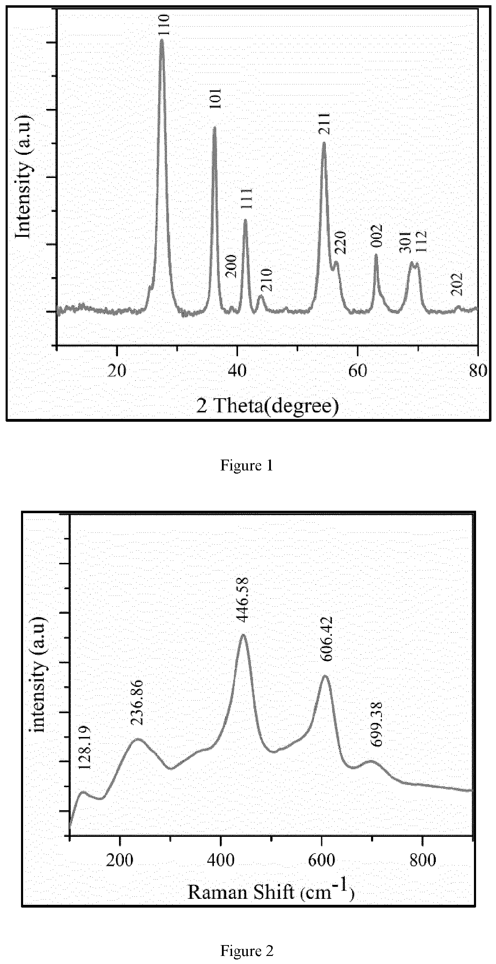

X-Ray diffraction study. The oxygen-deficient $TiO_2$ material prepared according to Example 1 was identified as phase-pure rutile $TiO_2$ by means of X-ray diffraction (XRD) measurements of the material. The XRD instrument was an Empyrean, manufactured by PANalytical. XRD allows the determination of the sizes and phases of crystalline materials. Figure 1 shows the X-ray diffraction pattern of the material (X-ray radiation Cu-K$\alpha$=0.15418 nm). The peaks of the rutile TiO$_2$ are well distinguished and the crystal faces identified, namely those at 2$\theta$=27.5° (110), 2$\theta$=36° (101) and 2$\theta$=54° (211), which confirmed the presence of rutile TiO$_2$ (Kheamrutai Thamaphat et al, Kasetsart J. (Nat. Sci.), 2008, 42(5), 357-361; J. Liqiang et al, Journal of Solid State Chemistry, 2004, 177, 3375-3382). The crystallite size was determined from the broadening of corresponding X-ray spectral peaks by Scherrer formula (Q.H. Zhang, et al., Appl. Catal. B, 2000 26, 207-215): L = $K\lambda/(\beta\cos\theta)$; where L is the crystallite size, $\lambda$ is the wavelength of the X-ray radiation (CuK$\alpha$=0.15418 nm), $K$ is a geometrical factor equal to 0.89, $\beta$ is the line width at half-maximum height and $\theta$ is the diffraction angle of the most prominent peak (2$\theta$=27.5°). Crystallite size calculation from Scherrer equation was 6 nm. Contrary to what is usually disclosed in the art, the prepared nanowires were not submitted to a calcination treatment, and were yet obtained as rutile phase.

_Raman spectroscopy measurements._ Figure 2 shows the Raman spectrum of the material prepared in Example 1. Results confirmed that the material obtained in Example 1 was phase-pure rutile TiO$_2$, taking the literature data as reference. According to J. Yang et al, J. Colloid Interface Sci., 2005, 283, 102, rutile TiO$_2$ is expected to show Raman bands at 241, 444, and 607 cm$^{-1}$, which are similar to those observed in Figure 2. Small shifts in the bands might be due to oxygen vacancies. In addition, low frequency broadening and the presence of a minor peak at 699 cm$^{-1}$ (a combination effect of B2g fundamental band of 826 cm$^{-1}$ and an additional band of 685 cm$^{-1}$, which happens for nanoscale particle sizes) confirmed the nano-sized nature of the rutile TiO$_2$ obtained according to Example 1.

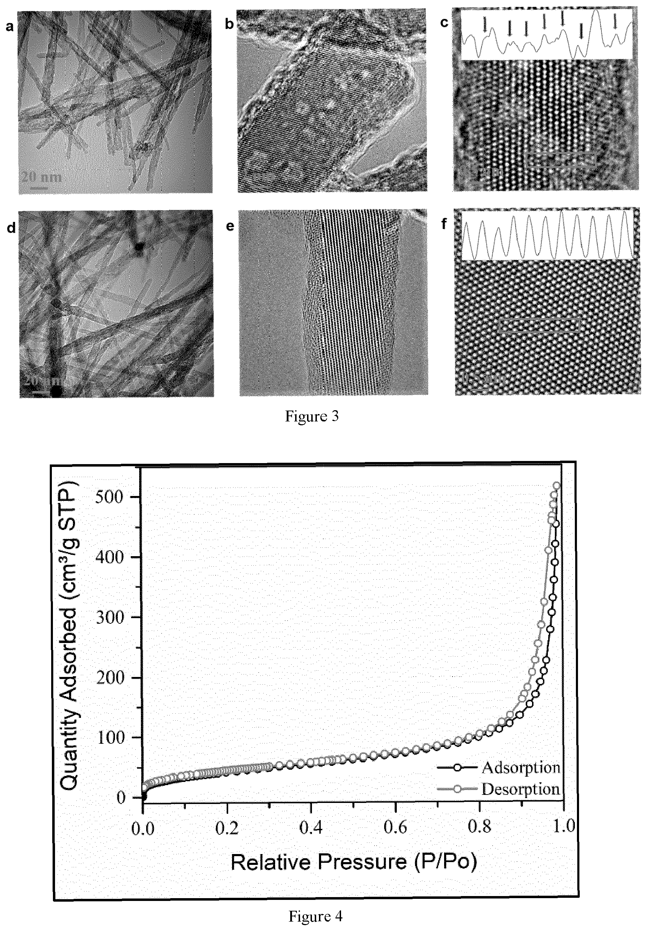

_Transmission electron microscopy (TEM) analysis._ TEM imaging of the nanomaterial of Example 1 revealed a nanowire structure, as shown in Figure 3. TEM images further allowed measurement of the diameter and length of the nanowires, determined to be around 5-7 diameter and around 100 nm of length. Oxygen deficient lattice structure with a d-spacing of 0.34 nm was also identified.

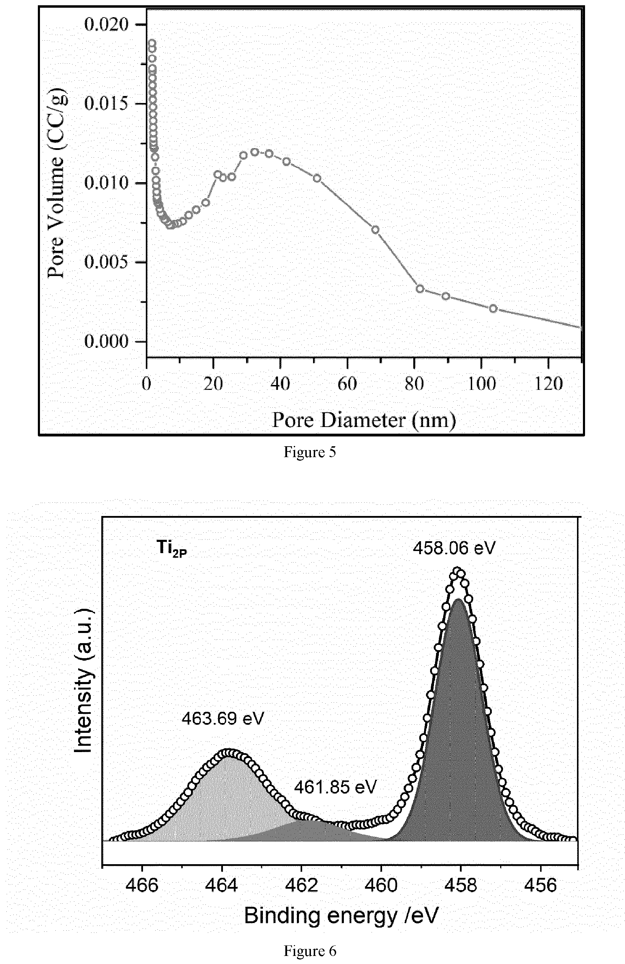

_Textural property measurements._ Nitrogen adsorption Brunauer-Emmett-Teller measurements revealed that the material of Example 1 had a surface area of 157 m$^2$/g (Figure 4). Pore diameter distribution, measured according to the Barrett-Joyner-Halenda method confirmed the nonporous nature of the oxygen-deficient rutile TiO$_2$ nanowires. The peak around 40 nm in Figure 5 is associated as the inter-particle space of nanowire agglomerates.

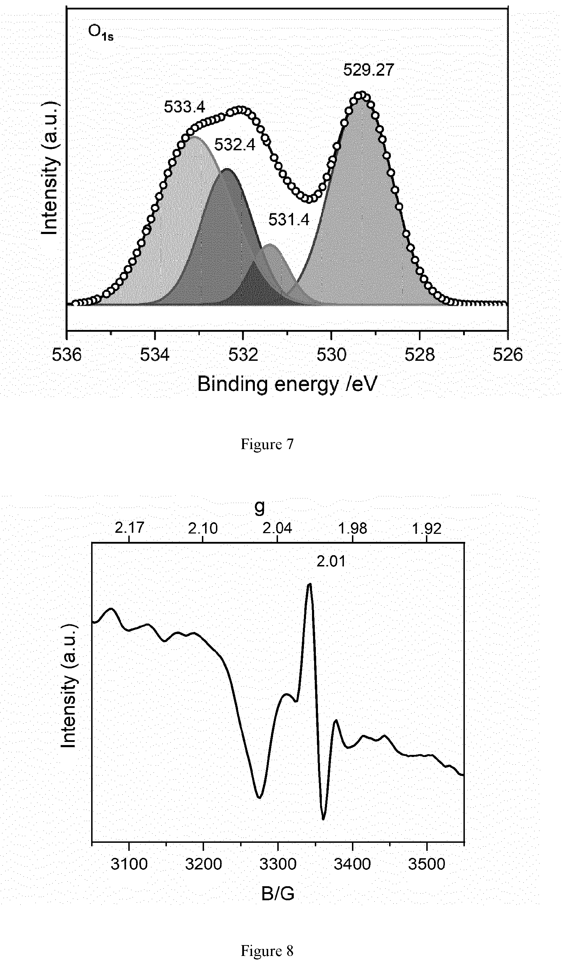

_X-ray photoelectron microscopy (XPS) analysis._ XPS studies allowed determination of the elemental composition of the TiO$_2$ material prepared according to Example 1. Figure 6 shows the Ti 2p XPS of oxygen-deficient TiO$_2$ while Figure 7 shows the O 1s XPS of TiO$_2$. Figure 6 demonstrated that Ti elements were mainly +4 valence (peaks at 458.06 and 463. 69 eV) but Ti$^{3+}$ was also observed (peak at 461.85 eV). Figure 7 showed crystal lattice oxygen atoms (peak at 529.31 eV) but also oxygen vacancies (531.4 eV), chemisorbed oxygen (peak at 532.4 eV) and surface adsorbed moisture (peak at 533.4 eV)

_Electron paramagnetic resonance (EPR) measurements._ Electron paramagnetic resonance measurements of the oxygen-deficient TiO$_2$ material prepared according to Example 1 further confirmed the presence of deficiencies due to the presence of oxygen-vacancies (Figure 8). This is due to the signal with a g factor at approximately 2.01, characteristic of superoxide radicals (O$_2^-$) generated by the unpaired electron trapping at the oxygen vacancy locations.

**Example 3**. Preparation of an exemplary electrode comprising the oxygen-deficient TiO$_2$ nanowires obtained according to example 1.

Composite electrodes were prepared by mixing oxygen-deficient rutile TiO$_2$ nanowire as prepared in example 1 (active material), acetylene black (conductive additive) and PVDF (binder). The ingredients were made into a slurry in a relative ratio of 70:20:10 wt% in NMP solvent using a mechanical mixing unit at 800 rpm. The uniform slurry obtained was coated on a copper foil using doctor blade method followed by drying under vacuum at 80 °C for 6 hours to ensure complete evaporation of NMP solvent. Dried laminates were cut in to 1.2mm diameter discs and used as the working electrodes.

**Example 4**. Preparation of an exemplary coin half-cell comprising the electrode of the invention.

Coin cells (2032 type) were fabricated inside an argon (99.999%) filled glove box fitted with oxygen and moisture detectors to (O$_2$ and H$_2$O contents < 1 ppm). Composite electrodes prepared in example 3 were cut in to discs of 12 mm diameter. Freshly polished foils of metals that need to be used as the counter electrode were also cut in to the same dimension. Whatman glass fiber filters of GB/F grade was used as separators (13.5mm diameter discs). Electrolyte for Li-ion battery consists of 1M LiPF$_6$ in Ethylene carbonate/ Ethyl methyl carbonate (EC/EMC). Mg-battery electrolyte consist of 0.4M all phenyl complex (APC) in tetrahydrofuran (THF). Separator and electrodes were dried overnight in vacuum at 80 °C prior to loading in to the glove box for making the electrochemical cells. Electrolyte solutions were dried for one week consecutively with 4 Å and 3Å molecular sieves. Coin cells were fabricated using a coin cell crimper (MTI Corporation).

**Example 5**. Electrochemical characterization of the Li-ion half-cells of example 4.

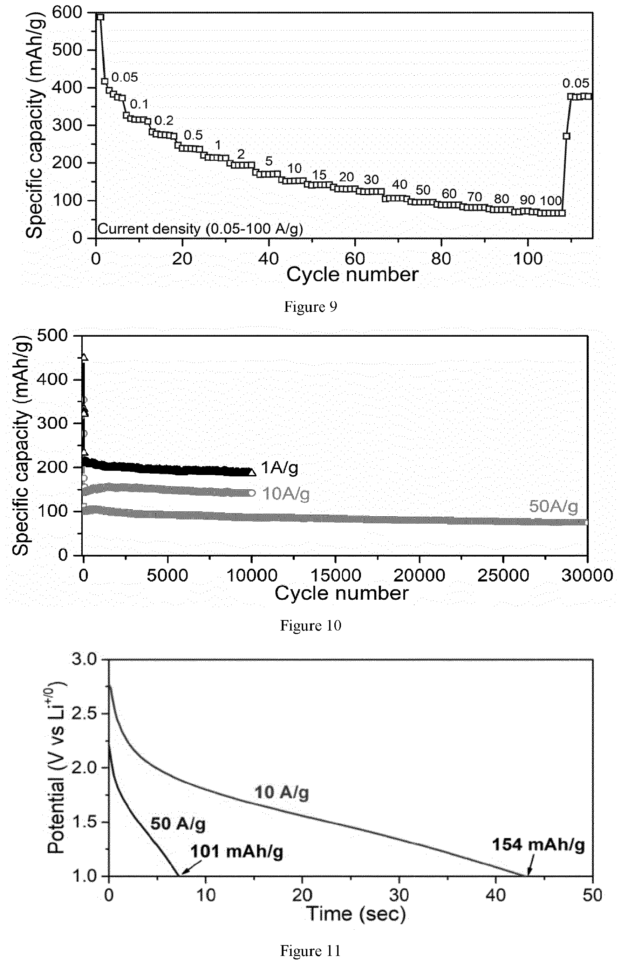

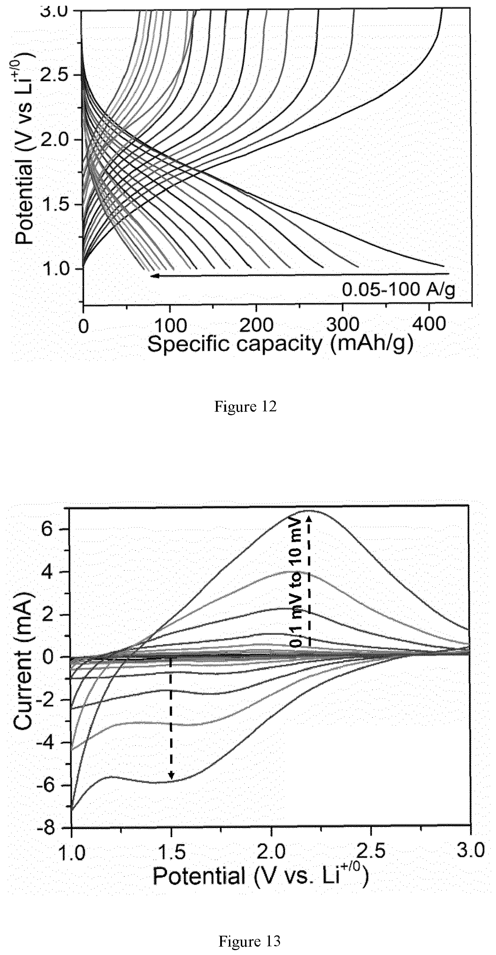

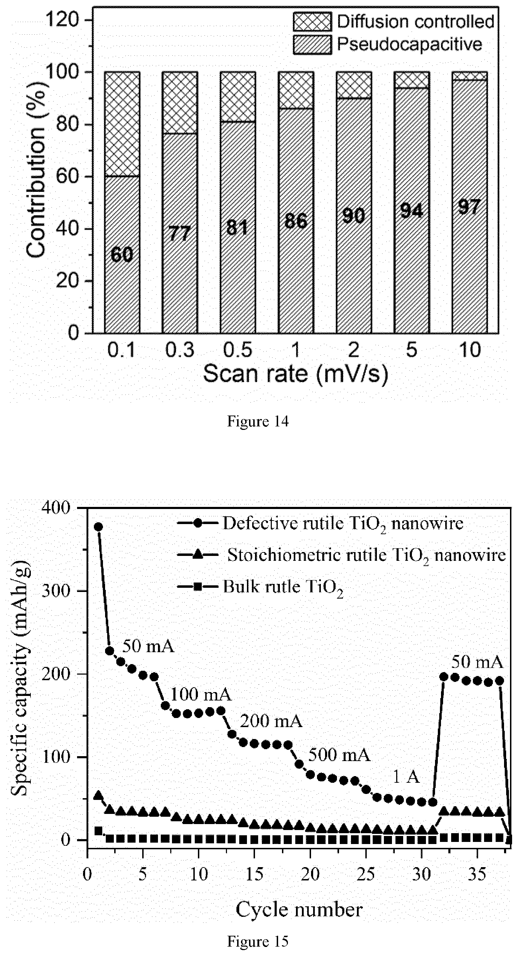

The Li-ion coin half-cells prepared according to the previous example were subjected to electrochemical measurements. Galvanostatic rate and cycling performances were studied using a multichannel battery tester (Neware BTS-4000) at constant temperature of 25 °C. Cyclic Voltammetry studies at scan rates in the range of 0.1mV/s to 1000 mV/s were performed with an electrochemical workstation (ZIVE-SP1). The half-cells were submitted to charge discharge cycles and the results are shown in Figure 9. As can be seen, the material of the invention allows little to negligible loss in the capacity of the cells with increasing the current density. Surprisingly, the oxygen-deficient $TiO_2$ nanowires of the invention can withstand a current density of 100 A/g without suffering structural damage: after cycling at 100 A/g (specific capacity of about 75 mAh/g), the current is decreased back to 0.05 A/g and the material still has the same specific capacity (around 400 mAh/g) as it did in the first cycling at 0.05 A/g. This is evidence of great stability against high currents. Figure 10 shows the cycling stability of the electrode of the invention at 1, 10 and 50 A/g. Results show that after 8000 cycles at 10 A/g, the electrode's specific capacity is practically the same as its initial capacity. In addition, even after 30000 cycles at 50 A/g, the specific capacity of the electrode is still at approximately 80 mAh/g, which is 80% of its initial value (approximately 100 mAh/g). Again, the results show that the electrode material of the invention, which comprises the oxygen-deficient rutile $TiO_2$ nanowires, is extremely stable and allows a very high number of cycles without loss in capacity when used in a Li-ion electrochemical cell. Figure 11 shows the galvanostatic discharge curves for the Li-ion electrochemical cell at 10 and 50 A/g. These results are evidence that the electrochemical cell is capable of discharging at a rate of 10 A/g in less than 45 seconds, and in less than 10 seconds at a rate of 50 A/g. This behavior leads to the conclusion that pseudocapacitive type Li/ Mg ion storage of oxygen-deficient rutile $TiO_2$ nanowires is responsible for the ultrafast charging time. Figure 12 shows Potential vs. specific capacity curves for the first cycle at increasing current densities (from 0.05 to 100 A/g). The potential range was set to 1.0-3.0 V (vs. Li$^+$/Li). The identical charge/discharge profiles independent of current density variations indicates similar electrochemical process. Further electrochemical characterization of the Li-ion storage capabilities of the electrode of the invention was conducted by means of cyclic voltammetry (CV). Figure 13 shows the CV curves (at 0.1, 0.3, 0.5, 1, 2, 5 and 10 mV) which confirm the pseudocapacitive type Li-ion storage in the oxygen-deficient rutile $TiO_2$ nanowires of the invention. In Figure 14, the capacitive contribution of the Li-ion storage electrode material of the invention is presented as a function of the scan rate. It is clear that the capacitive behavior increases with the scan rate.

**Example 6.** Electrochemical characterization of the Mg-battery of example 4.

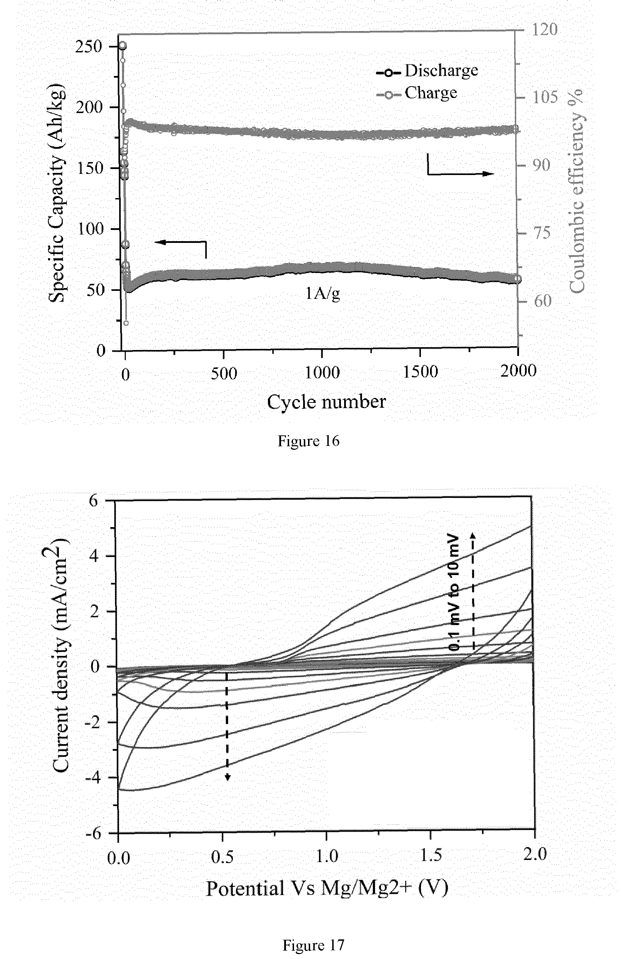

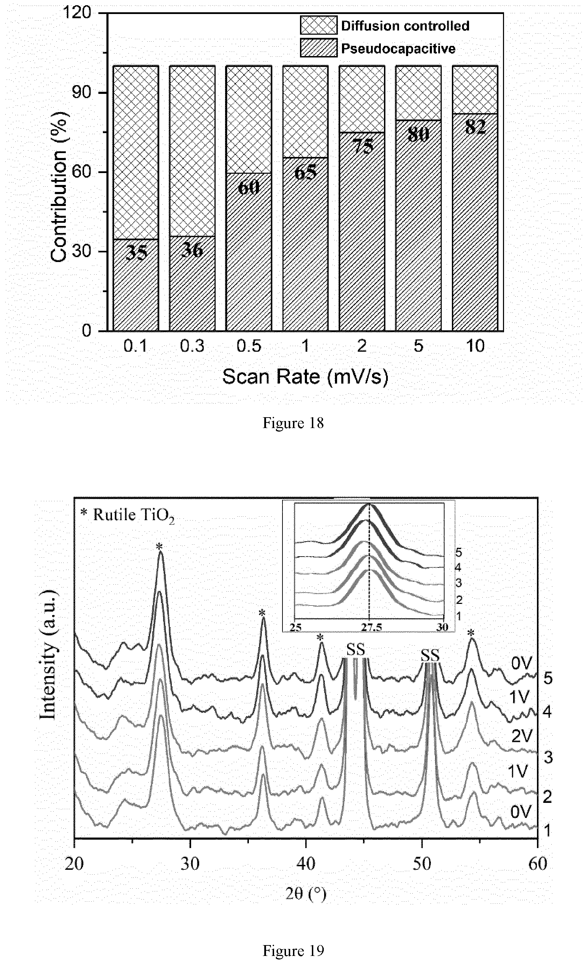

The Mg-ion coin half-cells prepared according to the previous example were submitted to electrochemical measurements. Galvanostatic rate and cycling performances were studied using multichannel battery tester (Neware BTS-4000) at a constant temperature of 25 °C. Cyclic Voltammetry studies at scan rates in the range of 0.1mV/s to 1000 mV/s were carried out with an electrochemical workstation (ZIVE-SP1). The half-cells were subjected to charge discharge cycles and the results are shown in Figure 15. As can be seen, the material of the invention allows the provision of Mg-ion electrodes capable of capacities as high as 220 mAh/g (at 50 mA) and 60 mAh/g (at 1 A). Figure 16 shows the Mg-ion cycling stability of the electrode of the invention at 1 A/g. The results show that after 2500 cycles at 1 A/g, the electrode's specific capacity is within 90% its initial capacity. Further electrochemical characterization of the Mg-ion storage capabilities of the electrode of the invention was conducted by means of cyclic voltammetry (CV). Figure 17 shows the CV curves (at 0.1, 0.3, 0.5, 1, 2, 5 and 10 mV) which confirm the pseudocapacitive type Mg-ion storage in the rutile $TiO_2$ nanowires of the invention. In Figure 18, the capacitive contribution of the Mg-ion storage electrode material of the invention is shown as a function of the scan rate. The capacitive behavior increases with the scan rate.

**Example 7.** XRD and optical characterization of the electrode as an Mg-ion electrode, after cycling.

To assess the stability of the electrode upon cycling, the Mg-ion cell electrode prepared in example 4 was subjected to XRD analysis after cycling. Results of the Mg-ion cell electrode at different charge states are shown in Figure 19, where the charge states are as follows: 1 - rutile $TiO_2$ at 0V discharge; 2 - rutile $TiO_2$ at 1V charge; 3 - rutile $TiO_2$ at 2V charge; 4 - rutile $TiO_2$ at 1V discharge; 5 - rutile $TiO_2$ at 0V discharge. These results demonstrate that there is no significant shift in X-ray diffraction patterns. This is indication that no significant structural changes occur during the Mg-ion insertion process. In addition, visual inspection of the rutile $TiO_2$ nanowires before and after Mg-ion insertion (after cycling) shows a dramatic color change from off-white to blue. This further confirms that Ti$^{4+}$ is reduced to Ti$^{3+}$.

**Example 8.** Preparation of an exemplary rechargeable battery comprising the electrode of the invention.

Coin cells were fabricated inside the argon filled glove box having oxygen and moisture partial pressure less than1ppm. Composite electrodes containing oxygen-deficient rutile $TiO_2$ nanowires were cut in to discs of 12 mm diameter. Freshly polished foils of the metals that need to be used as the counter/ reference electrodes were also cut in the same dimension. Whatman glass microfiber filters of GB/F grade is used as the separators (13.5mm diameter discs). 1M LiPF6 in Ethylene carbonate/ Ethyl methyl carbonate (EC/EMC) served as the Li cell electrolyte and 0.4M all phenyl complex (APC) in tetrahydrofuran (THF) served as the Mg cell electrolyte. Separator and electrodes were dried overnight in vacuum at 80 °C prior to loading in to the glove box for making the electrochemical cells. Electrolyte solutions were dried for one week consecutively with 4 Å and 3Å molecular sieves. Coin cells were fabricated using a coin cell crimper (MTI Corporation).

PREFERRED EMBODIMENTS

The following non-exhaustive numerical list describes those, which are considered the most preferred embodiments of the invention.

Embodiment 1. An electrode comprising oxygen-deficient rutile $TiO_2$ nanowires, wherein the nanowires are characterized by:

- a width comprised between 3 and 10 nm, preferably between 3 and 8 nm;
- a length comprised between 50 and 500 nm, preferably between 50 and 250 nm; and
- a high resolution O1s XPS signal of $TiO_2$ nanowires between 530.5 and 535.0 eV.

Embodiment 2. The electrode according to the preceding embodiment, characterized in that it is an anode or cathode.

Embodiment 3. The electrode of any one of the preceding embodiments, characterized in that the high-resolution O 1s X-ray photoelectron spectroscopy signal from 530.5 to 535.0 eV is the combination of a peak from 530.5 to 532.0 eV, 532.0-534.0 eV and a 532.0 and 535.4 eV.

Embodiment 4. The electrode of any one of the preceding embodiments, wherein the nanowires are characterized by a second O 1s XPS peak from 527.5 to 532.2 eV, preferably having a maximum intensity at 529.31 eV

Embodiment 5. The electrode of the preceding embodiment, characterized in that the ratio between the areas of peak in between 530.5 and 532.0eV and the peak in between 527.5 and 532.2 eV is from 0.11 to 0.19, preferably from 0.145 to 0.155.

Embodiment 6. The electrode of any one of the preceding embodiments, wherein the oxygen-deficient rutile $TiO_2$ has formula $TiO_x$, wherein x is between 1.50 and 1.80, particularly between 1.60 and 1.76, more particularly between 1.70 and 1.72, and even more particularly x is 1.71.

Embodiment 7. The electrode of any one of the preceding embodiments, characterized in that the nanowires are further characterized by a shoulder from 462.0 eV to 466.0 eV centered at 463.69 eV, and by a peak from 456.2 to 459.8 eV, centered at 458.06 eV, present in a titanium Ti 2p high resolution X-ray photoelectron spectroscopic analysis of the nanowires.

Embodiment 8. The electrode of any one of the preceding embodiments, characterized in that the nanowires are further characterized by a low intensity intermediate energy peak from 460.0 to 463.8 eV centered at 461.85 eV present in a titanium Ti 2p high resolution X-ray photoelectron spectroscopic analysis of the nanowires.

Embodiment 9. The electrode of any one of the preceding embodiments, characterized in that the oxygen-deficient rutile $TiO_2$ nanowires have a crystallite size comprised between 4 and 8 nm, preferably between 5 and 7 nm, more preferably 6 nm, calculated applying the Scherrer equation to the X-ray diffraction pattern of the nanowires.

Embodiment 10. The electrode of any one of the preceding embodiments, characterized in that the oxygen-deficient rutile $TiO_2$ nanowires have a surface area comprised between 100 $m^2/g$ and 300 $m^2/g$, preferably between 150 and 175 $m^2/g$, measured by the nitrogen adsorption Brunauer-Emmett-Teller method.

Embodiment 11. The electrode of any one of the preceding embodiments, characterized in that the oxygen-deficient rutile $TiO_2$ nanowires have a (110) crystalline lattice structure with a d-spacing from 0.30 to 0.38 nm, preferably from 0.33 to 0.35 nm, more preferably of 0.34 nm.

Embodiment 12. The electrode of any one of the preceding embodiments, characterized in that the width of the oxygen-deficient rutile $TiO_2$ nanowires is comprised between 5 and 7 nm.

Embodiment 13. The electrode of any one of the preceding embodiments, characterized in that the length of the oxygen-deficient rutile $TiO_2$ nanowires is comprised between 75 and 125 nm.

Embodiment 14. The electrode of any one of the preceding embodiments, characterized in that the oxygen-deficient rutile $TiO_2$ nanowires have a pore diameter distribution of less than 5 nm, preferably less than 2 nm, more preferably less than 1 nm, as measured according to the Barrett-Joyner-Halenda method.

Embodiment 15. The electrode of any one of the preceding embodiments, characterized in that the oxygen-deficient rutile $TiO_2$ nanowires have an X-ray diffraction pattern with peaks at 2θ=27.5° (110), 2θ=36° (101) and 2θ=54° (211), when the X-ray radiation is that of CuKα at 0.15418 nm.

Embodiment 16. The electrode of any one of the preceding embodiments, characterized in that the oxygen-deficient rutile $TiO_2$ nanowires have an X-ray diffraction pattern with peaks at 2θ=41.5° (111), 2θ=44° (210), 2θ=56° (220), 2θ=63° (002), 2θ=69° (301) and 2θ=70° (112), when the X-ray radiation is that of CuKα at 0.15418 nm.

Embodiment 17. The electrode of any one of the preceding embodiments, characterized in that the oxygen-deficient rutile $TiO_2$ nanowires have bands from 232 to 240 cm$^{-1}$, from 442 to 450 cm$^{-1}$, from 604 to 608 cm$^{-1}$, and from 697 to 701 cm$^{-1}$, present in a Raman spectroscopic analysis of the nanowires.

Embodiment 18. The electrode of any one of the preceding embodiments, characterized by a signal with a g factor at from 2.00 to 2.02, present in an electron paramagnetic resonance spectroscopic analysis of the nanowires.

Embodiment 19. The electrode of any one of the preceding embodiments, characterized in that the oxygen-deficient rutile $TiO_2$ nanowires are phase-pure rutile $TiO_2$.

Embodiment 20. The electrode of any one of the preceding embodiments, characterized in that the $TiO_2$ nanowires are free from a coating layer.

Embodiment 21. The electrode of any one of the preceding embodiments, characterized in that it is suitable for Li-, Mg-, Na-, K-ion, Li-S, Na-S, Mg-S, Li/Mg, Na/Mg, Li/Na-ion, $Li-O_2$, $Na-O_2$ or $Mg-O_2$ storage electrode.

Embodiment 22. The electrode of any one of the preceding embodiments, characterized in that it stores from 1.2 to 1.3 mol of Li-ions, preferably about 1.25 mol Li-ions and characterized in that it has a Li-ion storage specific capacity of from 350 to 480 mAh/g, preferably from 400 to 440 mAh/g, even more preferably 420 mAh/g at a current density of 0.05mA/g.

Embodiment 23. The electrode of any one of the preceding embodiments, characterized in that it stores Li-ions through a diffusion-independent pseudocapacitive process, preferably 86% at 1mV/s and 97% at 10 mV/s.

Embodiment 24. The electrode of any one of the preceding embodiments, characterized in that it operates at a current density of up to 150A, preferably 100A.

Embodiment 25. The electrode of any one of the preceding embodiments, characterized in that it charges to maximum charge in less than 15 seconds, preferably less than 5 seconds, even more preferably in less than 3 seconds.

Embodiment 26. The electrode of any one of the preceding embodiments, characterized in that after 30,000 cycles of charging-discharging a Li-ion battery, the maximum charge is at 80%, preferably 85%, more preferably 90% of the charge at cycle 2.

Embodiment 27. The electrode of any one of the preceding embodiments, characterized in that it undergoes no structural change during Mg-ion insertion.

Embodiment 28. The electrode of any one of the preceding embodiments, characterized in that it undergoes crystalline to amorphous state during Li-ion storage processes.

Embodiment 29. The electrode of any one of embodiments 1 to 22, characterized in that it has an Mg-ion specific capacity of from 180 to 250 mAh/g, preferably from 190 to 220 mAh/g, more preferably of 210 mAh/g at current density of 50mA/g.

Embodiment 30. The electrode of any one of embodiments 1 to 22, characterized in that it stores Mg-ions through a diffusion-independent intercalation pseudocapacitive process, preferably 65% at 1mV/s and 82% at 10 mV/s.

Embodiment 31. The electrode of any one of embodiments 1 to 22, characterized in that it has an Mg-ion specific capacity of from 50 to 60 mAh/g, preferably 52 to 58 mAh/g, even more preferably of 56 mAh/g, at a current density of from 0.9 to 1.1A, preferably at a current density of 1A/g.

Embodiment 32. The electrode of any one of embodiments 1 to 22, or of any one of embodiments 29 to 31, characterized in that after 2000 cycles of charging-discharging an Mg-ion battery, the maximum charge is at 80%, preferably 85%, more preferably 90% of the charge at cycle 2.

Embodiment 33. The electrode of any one of embodiments 1 to 22, or of any one of embodiments 29 to 32, characterized in that it does not undergo structural changes during Mg-ion insertion.

Embodiment 34. The electrode of embodiment 1, wherein the oxygen-deficient rutile $TiO_2$ nanowires are characterized by:

a. the $TiO_2$ nanowires are phase-pure oxygen-deficient rutile $TiO_2$;
b. a high-resolution O 1s XPs spectra has a low energy peak from 527.5 to 532.2 eV and a high energy peak from 530.5 to 535.0 eV and is the combination of a peak from 530.5 to 532.0 eV, 532.0 to 534.0 eV and from 532.0 and 535.4 eV;
c. a high resolution Ti 2p XPS spectra composed of a lower energy peak from 456.2 to 459.8 eV, centered at 458.06 eV, an intermediate energy peak from 460.0 to 463.8 eV centered at 461.85 eV and an upper energy peak in between 462.0 eV and 466.0 eV centered at 463.69 eV; and
d. oxygen vacancy concentration is comprised between 12% and 20%, calculated from the ratio between:

- the area of the peak from 530.5 to 532.0 eV and the peak in between 527.5 and 532.2 eV; or
- the area of the peak from 462.0 eV and 466.0 eV centered at 463.69 eV and the low intensity intermediate energy peak from 460.0 to 463.8 eV centered at 461.85 eV.

Embodiment 35. The electrode of embodiment 1, wherein the $TiO_2$ nanowires are characterized by:

a. TiO$_2$ nanowires are phase-pure oxygen-oxygen-deficient rutile TiO$_2$;

b. High resolution O 1s XPS peak from 530.5 to 535.0 eV is the combination of a peak from 532.5 to 532.0 eV, a peak from 532.0 to 534.0 eV and a peak from 532.0 and 535.4 eV;

c. TiO$_2$ nanowires have a crystallite size comprised between 5 and 7 nm, more preferably 6 nm, calculated applying the Scherrer equation to the X-ray diffraction pattern of the nanowires;

d. TiO$_2$ nanowires have a surface area comprised between 150 and 175 m$^2$/g, measured by the nitrogen adsorption Brunauer-Emmett-Teller method;

e. TiO$_2$ nanowires have a crystalline lattice structure with a d-spacing of from 0.33 to 0.35 nm; and

f. oxygen vacancy concentration is comprised between 12% and 20%, calculated from the ratio between:

- the area of the peak from 530.5 to 532.0 eV and the peak in between 527.5 and 532.2 eV; or
- the area of the peak from 462.0 eV to 466.0 eV peaking at 463.69 eV and the low intensity intermediate energy peak from 460.0 to 463.8 eV peaking at 461.85 eV.

Embodiment 36. A method for the preparation of the oxygen-deficient rutile TiO$_2$ nanowires of any one of the preceding embodiments, comprising the step of reacting a titanium precursor in a mixture of water and an organic solvent in acidic medium for at least 1 hour at a temperature between 100 and 200 °C.

Embodiment 37. The method of the embodiment 36, wherein the organic solvent is selected from ethylene glycol, di-ethylene glycol, tri-ethylene glycol, polyethylene glycol, toluene, glycerol, ethanol, methanol, propanol, butanol and mixtures therefrom, preferably ethylene glycol.

Embodiment 38. The method of the embodiment 36 or 37, wherein the acidic medium is selected from hydrochlroridric acid, nitric acid, sulfuric acid, acetic acid, citric acid and mixtures thereof.

Embodiment 39. The method of any one of embodiments 36 to 38, wherein the reaction time at least 4 hours, preferably 6 hours.

Embodiment 40. The method of any one of embodiments 36 to 39, wherein the reaction temperature is between 120 and 180 °C, preferably between 140 and 160 °C.

Embodiment 41. The method of any one of embodiments 36 to 40, further comprising the step of isolating the rutile TiO$_2$ nanowires in precipitate form.

Embodiment 42. The method of embodiment 41, wherein the isolated rutile TiO$_2$ nanowires are washed with water and an organic solvent selected from ethanol, ethanol, acetone, isopropyl alcohol, methanol, butanol and mixtures therefrom.

Embodiment 43. The method of any one of embodiments 36 to 42, characterized in that it does not comprise a step of heating above 200 °C.

Embodiment 44. Oxygen-deficient rutile TiO$_2$ nanowires obtainable according to the method of any one of embodiments 36 to 43.

Embodiment 45. An electrochemical cell, comprising

a. a first electrode according to any one of embodiments 1 to 35 or comprising an electrode which comprises the nanowires of embodiment 44;

b. a second electrode; and

c. an electrolyte between the first and second electrodes.

Embodiment 46. The electrochemical cell of embodiment 45, selected from the group consisting of Li-ion, Mg-ion, Na-ion, K-ion, Mg/Li, Mg/Na, Li/Na, Li-O$_2$, Na-O$_2$, Mg-O$_2$ and alkali-ion hybrid cells.

Embodiment 47. A rechargeable battery, comprising an electrochemical cell of any of embodiments 45 or 46.

Embodiment 48. A rechargeable battery, comprising:

a. A first electrode according to any one of embodiments 1 to 35 or a first electrode that comprises the nanowires of embodiment 44;

b. A second electrode; and

c. An electrolyte between the first and second electrodes.

Embodiment 49. The rechargeable battery of any one of embodiments 47 or 48, characterized in that it is a Li-ion, Mg-ion, Na-ion, Li-O$_2$, Mg-O$_2$, Li-S, Na-S, Mg-S, a hybrid battery of Li/Mg or Li/Na or Mg/Na, preferably a Li-ion, Mg-ion or Na-ion battery.

Embodiment 50. The rechargeable battery of any one of embodiments 47 to 49, characterized in that the first electrode is an anode and that the second electrode is a cathode.

Embodiment 51. Use of oxygen-deficient rutile TiO$_2$ nanowires, wherein the nanowires are characterized by:

- a width comprised between 3 and 10 nm;
- a length comprised between 50 and 500 nm; and
- a high resolution O1s XPS signal between 530.5 and 535.0 eV,

in an electrochemical cell, a solar cell, an electrochemical capacitor, an oxygen sensor or a water-splitting photocatalyst.

Embodiment 52. Use of an electrode comprising rutile TiO$_2$ nanowires, wherein the nanowires are characterized by:

- a width comprised between 3 and 10 nm, preferably between 3 and 8 nm;
- a length comprised between 50 and 500 nm, preferably between 50 and 250 nm; and

  - a high resolution O1s XPS signal between 530.5 and 535.0 eV,

in an electrochemical cell, a solar cell, electrochemical capacitors, oxygen sensors or water-splitting catalysts.

Embodiment 53. Use of the electrode comprising rutile $TiO_2$ nanowires of any one of embodiments 2 to 35, in an electrochemical cell, a solar cell, an electrochemical capacitor, an oxygen sensor or a water-splitting catalyst.

Embodiment 54. Use of oxygen-deficient rutile $TiO_2$ nanowires according to embodiment 51, or of an electrode comprising oxygen-deficient rutile $TiO_2$ nanowires according to embodiments 52 or 53, in an electrochemical cell.

**Claims**

1. An electrode comprising oxygen-deficient rutile $TiO_2$ nanowires, wherein the nanowires are **characterized by**:

   - a width comprised between 3 and 10 nm;
   - a length comprised between 50 and 500 nm; and
   - a high resolution O 1s XPS signal between 530.5 and 535.0 eV.

2. The electrode of any one of the preceding claims, **characterized in that** the high-resolution O 1s XPS spectra between 530.5 and 535.0 eV is the combination of a peak from 530.5 to 532.0 eV, a second peak from 532.0 to 534.0 eV and a third peak from 532.0 and 535.4 eV.

3. The electrode of any one of the preceding claims, wherein the nanowires are further **characterized by** high-resolution Ti 2p XPS spectra between 456.2 and 459.8 eV centered at 458.06 eV, an intermediate energy peak from 460.0 to 463.8 eV centered at 461.85 eV and a signal between 462.0 eV and 466.0 eV centered at 463.69 eV.

4. The electrode of any of the preceding claims, wherein the oxygen-deficient rutile has formula $TiO_x$, wherein x is between 1.50 and 1.80.

5. The electrode of claim 4, wherein x is between 1.60 and 1.76.

6. The electrode of any one of the preceding claims, **characterized in that** the oxygen-deficient rutile $TiO_2$ nanowires have a crystallite size comprised between 4 and 8 nm, calculated applying the Scherrer equation to the X-ray diffraction pattern of the nanowires.

7. The electrode of any one of the preceding claims, **characterized in that** the oxygen-deficient rutile $TiO_2$ nanowires have a surface area comprised between 100 $m^2$/g and 300 $m^2$/g, measured by the nitrogen adsorption Brunauer-Emmett-Teller method.

8. The electrode of any one of the preceding claims, **characterized in that** the oxygen-deficient rutile $TiO_2$ nanowires have a pore diameter distribution of less than 5 nm, as measured according to the Barrett-Joyner-Halenda method.

9. A method for the preparation of the oxygen-deficient rutile $TiO_2$ nanowires of any one of the preceding claims, comprising the step of reacting a titanium precursor in a mixture of water and an organic solvent in acidic medium for at least 1 hour at a temperature comprised between 100 and 200 °C.

10. The method according to claim 9, **characterized in that** it does not comprise a step of heating above 200 °C.

11. Oxygen-deficient rutile $TiO_2$ nanowires obtainable according to the method of any one of claims 9 or 10.

12. A rechargeable battery, comprising:

    a. a first electrode according to any one of claims 1 to 8 or a first electrode which comprises the oxygen-deficient rutile $TiO_2$ nanowires of claim 11;
    b. a second electrode; and
    c. an electrolyte between the first and second electrodes.

13. Use of oxygen-deficient rutile $TiO_2$ nanowires, wherein the nanowires are **characterized by**

    - a width comprised between 3 and 10 nm;
    - a length comprised between 50 and 500 nm; and
    - a high-resolution O 1s XPS signal of $TiO_2$ nanowires between 530.5 and 535.0 eV; in an electrochemical cell, a solar cell, an electrochemical capacitor, an oxygen sensor and a water-splitting photocatalyst.

Figure 1

Figure 2

Figure 3

Figure 4

Figure 5

Figure 6

Figure 7

Figure 8

Figure 9

Figure 10

Figure 11

Figure 12

Figure 13

Figure 14

Figure 15

Figure 16

Figure 17

Figure 18

Figure 19

# EP 3 929 156 A1

## EUROPEAN SEARCH REPORT

Application Number

EP 20 38 2542

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ARMSTRONG A R ET AL: "TiO2-B nanowires", ANGEWANDTE CHEMIE INTERNATIONAL EDITION, VERLAG CHEMIE¦, vol. 43, 19 April 2004 (2004-04-19), pages 2286-2288, XP002372760, ISSN: 1433-7851, DOI: 10.1002/ANIE.200353571 * the whole document * | 1-13 | INV. C01G23/04 H01M4/48 |
| A | YANG J ET AL: "Fabrication of rutile rod-like particle by hydrothermal method: an insight into HNO"3 peptization", JOURNAL OF COLLOID AND INTERFACE SCIENCE, ACADEMIC PRESS,INC, US, vol. 283, no. 1, 1 March 2005 (2005-03-01), pages 102-106, XP004734397, ISSN: 0021-9797, DOI: 10.1016/J.JCIS.2004.08.109 * "Abstract"; Experimental Procedure" * | 1-13 | |
| A | US 2012/301526 A1 (TOLEDO ANTONIO JOSE ANTONIO [MX] ET AL) 29 November 2012 (2012-11-29) * claims; examples * | 1-13 | TECHNICAL FIELDS SEARCHED (IPC) C01G H01M |

The present search report has been drawn up for all claims

| Place of search | Date of completion of the search | Examiner |
|---|---|---|
| Munich | 10 December 2020 | Marucci, Alessandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

26

## ANNEX TO THE EUROPEAN SEARCH REPORT
## ON EUROPEAN PATENT APPLICATION NO.

EP 20 38 2542

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2020

| Patent document cited in search report | Publication date | Patent family member(s) | Publication date |
|---|---|---|---|
| US 2012301526 A1 | 29-11-2012 | US 2006078726 A1<br>US 2010069233 A1<br>US 2010311576 A1<br>US 2012301526 A1 | 13-04-2006<br>18-03-2010<br>09-12-2010<br>29-11-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014140910 A
- EP 1785398 A1
- WO 2017146649 A

**Non-patent literature cited in the description**

- **H. D. NAM et al.** *Jpn. J. Appl. Phys.,* 1998, vol. 37 (8), 4603
- **IN S.R. DHAGE et al.** *Materials Letters,* 2004, vol. 58, 2310-2313
- **Q.H. ZHANG et al.** *Appl. Catal. B,* 2000, vol. 26, 207-215
- **KHEAMRUTAI THAMAPHAT et al.** *Kasetsart J. (Nat. Sci.),* 2008, vol. 42 (5), 357-361
- **J. LIQIANG et al.** *Journal of Solid State Chemistry,* 2004, vol. 177, 3375-3382
- **J. YANG et al.** *J. Colloid Interface Sci.,* 2005, vol. 283, 102